(19) Europäisches Patentamt
European Patent Office
Office européen des brevets

(11) **EP 2 209 851 B1**

(12) **EUROPEAN PATENT SPECIFICATION**

(45) Date of publication and mention
of the grant of the patent:
**10.05.2017 Bulletin 2017/19**

(51) Int Cl.:
*C08F 2/00* (2006.01)   *C09D 167/06* (2006.01)
*C09D 167/08* (2006.01)   *C08L 67/06* (2006.01)
*C08L 67/08* (2006.01)

(21) Application number: **08849616.1**

(22) Date of filing: **13.11.2008**

(86) International application number:
**PCT/EP2008/065450**

(87) International publication number:
**WO 2009/062996 (22.05.2009 Gazette 2009/21)**

(54) **AUTOXIDISABLE COATING COMPOSITION**

AUTOXIDIERBARE ZUSAMMENSETZUNG AUF HARZBASIS

COMPOSITION À BASE DE RÉSINE AUTO-OXYDABLES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **16.11.2007 EP 07022281**

(43) Date of publication of application:
**28.07.2010 Bulletin 2010/30**

(73) Proprietor: **Synres B.V.
3151 XN Hoek van Holland (NL)**

(72) Inventors:
• **GRISNICH, Willem**
**NL-8064 PG Zwartsluis (NL)**
• **REUVERS, Albertus Johannes**
**NL-6922 BM Duiven (NL)**
• **WILLEMS, Stefan Hendrikus Maria**
**NL-7641 HV Wierden (NL)**
• **HENDRIKS, Johannes Wilhelmus Maria**
**NL-8016 DB Zwolle (NL)**
• **KOLDIJK, Fokeltje Akke**
**NL-8017 DL Zwolle (NL)**
• **DAVIES, Philip John**
**NL-3514 HM Utrecht (NL)**

(74) Representative: **V.O.
P.O. Box 87930
2508 DH Den Haag (NL)**

(56) References cited:
**EP-A- 0 072 127    US-A- 4 311 624**

**Description**

The invention is directed to an autoxidisable coating composition, to a method for preparing said composition to paint comprising said composition to a method for applying said composition, to a substrate coated with said composition and to the use thereof.

The use of alkyd resins in paint products has the advantage that the alkyd resins are largely derivable from agricultural products, which are renewable sources. They are also easily biodegraded when buried in landfill sites which is advantageous when large quantities of waste paint needs to be discarded. However, alkyd polymers (at least when made by esterifications performed in solution) have the intrinsic problem of being extremely viscous liquids owing to the large proportion of polymer chains having high molecular weights. Therefore, the alkyd resins are usually dissolved in large amounts of volatile organic solvents to obtain a paint having a viscosity which allows it to be applied by brush at ambient temperatures to produce coatings which may be for instance up to 200 $\mu$m thick. Traditional liquid alkyd paints contain as much as 30 wt% or more of volatile organic solvent which is usually a hydrocarbon liquid such as white spirit. Typically, volatile organic solvents have a boiling point of up to 250 °C at 1 bar. As the paint dries, the solvent evaporates creating environmental pollution and also localised unpleasant smells.

Alkyd paints for professional and do-it-yourself use are subject to increasing technical and ecological restrictions. Environmental protection calls for a reduction in emissions of volatile organic compounds. In 1980 a standard (RAL-UZ-12a or "Blauer Engel") for low polluting paints was introduced, according to which paints should contain less than 15 wt% volatile organic compounds. According to EU legislation of 2010 for opaque solvent-borne decorative paints the content of volatile organic compounds must be reduced to 300 g$l^{-1}$.

Simple attempts to reduce the amount of solvent used in the alkyd paint would, of course, re-introduce the high viscosity problem mentioned above, which would make the paint difficult to apply by brush.

US 431 1624 describes an autoxidizable coating composition containing a reactive non-volatile diluent monomer system of a mixture of dicyclopentenyloxyalkyl esters of polymerizable ethylenically unsaturated carboxylic acids and methacryloxyalkyl esters of drying or semi-drying oil fatty acids, a film-forming component which contains autoxidizable functionality and a polyvalent metal containing salt or complex that catalyzes the autoxidative curing.

EP 0072127 describes an autoxidizable coating composition consisting of a film-forming component, a polymer of a molecular weight in the range of 1,000 to 50,000 (Mn) and an effective amount of at least one polyvalent metal salt or complex that catalyzes the oxidative curing.

Prior attempts for reducing the amount of volatile organic compounds in alkyd paints have for instance been directed to reducing the average molecular weight of the alkyd resin (such as a weight average molecular weight of less than 25 000, or even less than 15 000 gmol$^{-1}$), in order to make the paint less viscous. High solids paint formulations use low-molecular-weight resins (5000 to 20 000 gmol$^{-1}$ as compared to over 30,000 gmol$^{-1}$ for conventional resins), which require less solvent to attain the desired application viscosity. The consequence of reducing the molecular weight, however, is that substantially larger number of functional groups need to crosslink. This increased fatty acid content results in worse yellowing, hardness and durability properties. Decreasing molecular weight, as a means to increasing solids content, has also the negative effect of increasing drying time. According to GB 269169, attempts to overcome this problem by increasing the drier concentration have led to accelerated yellowing.

Molecular weight alone was therefore considered not to be the route to high solids and additional cure mechanisms were employed to accelerate drying. Also star-shaped, hyperbranched and dendritic polymers were described as a route to high molecular weight polymers with low viscosity.

Further, much attention has been directed to the replacement of at least some of the volatile organic solvent by relatively involatile reactive diluents. Reactive diluents such as drying oils, low molecular weight alkyds and methacrylate esters were reported as beneficial for formulating high solids alkyds with low VOC and viscosity. The term reactive diluent refers to a diluent which is polymerised during curing. In general, the reactive diluent lowers the viscosity and it is believed that the reactive diluents may dilute the viscous alkyd polymer sufficiently to enable it to be brushed onto a surface, but are not lost as pollutants into the atmosphere by evaporation from the drying coating. Instead, once the paint has been applied to the surface, it is believed that the reactive diluents are reacted so becoming part of the macromolecular film. Therefore the reactive diluent no longer exists as a liquid which would either slowly evaporate causing pollution or would remain in the coating and therefore detract from the hardness of the film. In the prior art, typically very low molecular weight (less than 2 000 gmol$^{-1}$) reactive diluents are mixed with alkyd resins in relatively small amounts (such as 20 wt.% based on the total weight of the composition).

Autoxidisable coating compositions with a low content of volatile organic compounds described in the prior art typically suffer from one or more of the following serious drawbacks.

First of all these coating compositions with a low content of volatile organic compounds have a slow rate of drying at temperatures below 30 °C. The rate of drying is fundamentally limited due to both the slow rate of penetration of oxygen into the drying film (see for instance Erich et al. Prog. Org. Coat. 2006, 55(2), 105-1 11 and Erich et al. J. Phys. Chem. B 2006, 110(15), 8166-8170), and the very large amount of oxygen needed to achieve a dry coating film.

The slow drying becomes more distinct upon reducing the content of volatile organic compounds in the coating composition. The need for a volatile organic compound reduction is commonly achieved by reducing either the average molecular weight or the glass transition temperature of the resin.

Furthermore, autoxidisable coating compositions with a low content of volatile organic compounds tend to display undesired wrinkling behaviour (Basu et al. Prog. Org. Coat. 2005, 53(1), 1-16), especially if the reduction of the weight average molecular weight is achieved by the addition of traditional reactive diluents.

In addition, autoxidisable coating compositions with a low content of volatile organic compounds typically show undesired yellowing due to the high oil length.

Also, the application of autoxidisable coating compositions with a low content of volatile organic compounds by brush or roller is usually accompanied with poor brush/roller-loading, dripping and unacceptable sagging phenomena. This problem is related to the Newtonian rheology and the slow increase of the viscosity upon evaporation of solvent during drying. Sagging can be avoided by addition of anti-sagging agents or thixotropic co-binders. In turn, however, these additives may cause new problems like handling problems, gloss reduction, yellowing or poor colour acceptance. Some measures are known to improve the rheological behaviour of high solid paints. For example, by reacting a polyamide or a polyamine/polyisocyanate combination with the alkyd resin at elevated temperatures as described in US-A-2663649 or EP-A-0668305. In this way so-called non-drip paints with a thixotropic gel structure are obtained. However, the co-reacted polyamide or polyamine/polyisocyanate combination causes undesired yellowing (discolouration) of the paint. Another way to improve the rheological properties of high-solid paints is by addition of anti-sagging agents such as silica dispersions. These additives, however, do not impart resistance against dripping or they do so at the expense of film levelling.

There remains a strong need for further reduction of the volatile organic compounds content in alkyd based coating compositions and in particular alkyd based paints, without having adverse effects on other properties of the coating composition, such as the drying properties and the colour.

An object of the invention is to provide an easy to formulate, non-yellowing autoxidisable coating composition.

A further object of the invention is to provide an autoxidisable coating composition that can be diluted to a viscosity $\leq 1.0$ Pas, more preferably $\leq 0.6$ Pas as measured at a shear-rate of 5000 s$^{-1}$ and a temperature of 23 °C, by adding $\leq 300$ gl$^{-1}$ of composition, of Exxsol D40, up to a maximum of 300 gl$^{-1}$ of VOC. Exxsol D40 is a hydrocarbon fluid having initial boiling point of typically 153 to 160 °C, a density at 15 °C of 0.77 kg/dm$^3$ and a viscosity at 25 °C of 1.25 mm$^2$/s.

A further object of the invention is to provide an autoxidisable coating composition having a maximum of 300 gl$^{-1}$ of volatile organic compounds at a pigment volume concentration (PVC) of up to 40 wt%, preferably up to 20 wt% and most preferably up to 15 wt%. A pigment volume concentration is defined as:

$$\frac{[volume\ (pigment\ ) + volume\ (filler\ )]}{[volume\ (pigment\ ) + volume\ (filler\ ) + volume\ (binder\ )]}$$

wherein "binder" refers to the volume of total polymer (i.e. resin) in the composition.

A further object of the invention is to provide an autoxidisable coating composition which has a shear-rate dependent (i.e. shear thinning) viscosity providing a combination of:

i) low 'brush resistance' experienced during applying the paint by brush to architectural surfaces at ambient temperature, which is related to the application viscosity (i.e. viscosity measured within the shear-rate range of 5,000 to 10,000 s$^{-1}$);

ii) high brushload and low dripping tendency (i.e. resistance of the paint against dripping from the brush), typically determined by measuring the viscosity of the composition for a shear rate of 20 to 40 s$^{-1}$, and

iii) sufficient sag resistance at a common wet coating thickness (e.g. a thickness of 100 $\mu$m) as related to the viscosity measured at a shear rate of 1 s$^{-1}$.

Another object of the invention is to provide an autoxidisable coating composition that upon dilution with solvent, more preferably with Exxsol D40, down to an application viscosity within the range of 0,1 to 1 Pas has a shear-rate dependent (shear thinning) viscosity characterized by:

- a medium-shear viscosity, measured within the shear-rate range of 20 to 40 s$^{-1}$, being $\geq 1.5$ times the high-shear viscosity measured within the shear-rate range of 5,000 to 10,000 s$^{-1}$;
- a low-shear viscosity, measured at a shear-rate of 1 s$^{-1}$ according to the procedure described below, being $\geq 1.5$ times the high-shear viscosity, which corresponds to a pseudoplasticity index $\geq 1.5$.

Preferably the low-shear viscosity, measured at a shear-rate of 1 s$^{-1}$ according to the procedure described below, is ≥ 2 times the high-shear viscosity, which corresponds to a pseudoplasticity index 2.

The ambient temperature at which the coating is dried is meant in the context of this invention to be a temperature of from 0 to 40 °C, preferably from 5 to 30 °C and most preferably from 10 to 25 °C. Experimental measurements to test the coating compositions were done at a temperature of 23 +/- 3 °C.

Yet another object of the invention is to provide an autoxidisable coating composition having after drying a combination of desirable properties for different types of applications, such as good flexibility, fast drying, high solids content and short dust free time and fast damage resistance. Other properties that may be improved are good adhesion, good outdoor durability, fast resistance to blocking and early sandability.

The inventors surprisingly found that one or more of these objects can be met by providing a binder composition of an autoxidisable alkyd resin and a autoxidisable material, wherein said components have a specific molecular weight distribution.

Accordingly, in a first aspect the invention is directed to an autoxidisable coating composition comprising a binder consisting of components:

(i) 20 to 70 wt. % of autoxidisable alkyd resin with
an Mz of 80 000 gmol$^{-1}$ or more; and
(ii) 30 to 80 wt. % of an autoxidisable material comprising at least 3 fatty acid groups, wherein the autoxidisable composition has
an Mp in the range of 1 700 to 4 000 gmol$^{-1}$;
a polydispersity index (PDI) in the range of 1 to 2;
an oil length of 50 % or more;
wherein

(a) the molecular weight distribution of components (i) and (ii) in the binder is such that:

at least 5 wt.% of the components (i) and (ii) taken together has a weight average molecular weight Mw of 100 000 gmol$^{-1}$ or more; at least 30 wt.% of components (i) and (ii) taken together has a weight average molecular weight Mw in the range of 2 000 to 4 000 gmol$^{-1}$; and

(b) the binder consisting of components (i) and (ii) has an Mp in the range of 1 700 to 4 500 gmol$^{-1}$,

said molecular weights Mw, Mz and Mp being determined by gel permeation chromatography in THF solvent using polystyrene standards.

It was found that the autoxidisable coating composition of the invention has exceptional fast drying behaviour (both at the surface and in-depth), minimal yellowing and wrinkling tendency, and displays a unique resistance against sagging. Unlike the prior art attempts, in which the average molecular weight of the alkyd resins is decreased for lowering the viscosity, or in which relatively low molecular weight reactive diluents are added to the alkyd resin, the present inventors found that favourable properties can be achieved by combining the alkyd resins having high weight average molecular weights Mw with suitable autoxidisable materials.

It was found that the effect obtained by the unique molecular weight distribution of the binder according to the invention may be explained by the following, non-binding theory. The shear-thinning viscosity behaviour within the shear-rate range of 1 to 5000 s$^{-1}$ is only obtained if (part of) the dissolved resin molecules display chain entanglement. Chain entanglement results into low-shear viscosity enhancement. At high shear rates the chains disentangle which results into shear thinning. Chain entanglement also reduces the amount of cross-links needed to reach the gel-point during the autoxidation process. Therefore, the lower limit (minimum) of mechanical strength needed to judge the paint to be dry is reached at a lower oxygen consumption. This is favourable for the in-depth drying, since the rate of in-depth drying is limited by the limited rate of oxygen diffusion into the drying paint film.

The extent of chain entanglement strongly depends on the molecular weight of the dissolved resin molecules. Chain entanglement starts to occur above a more or less critical molecular weight with a value depending on the degree of branching and the flexibility of the polymer. At further increasing molecular weight the extent of entanglement strongly increases with increasing molecular weight. Very likely, the dependency of the extent of chain entanglement on the molecular weight is stronger than that of the high-shear viscosity on the molecular weight. At fixed values of the VOC and high-shear viscosity therefore, the extent of entanglement increases at increasing broadening of the molecular weight distribution. However, the optimal width of the molecular weight distribution has a limited size, since molecules with extreme high molecular weight cause phenomena like spattering. And molecules with very low molecular weight cause wrinkling and oppose the build-up of sufficient hardness.

In accordance with the invention any alkyd resin can be used. Alkyds are prepared from the reaction of a polyhydric alcohol, a polybasic acid and an unsaturated oil to give an unsaturated fatty acid residue containing ester. The unsaturation in the ester polyol imparts latent cross-linkability so that when a coating composition thereof is dried in the air, often in conjunction with a drier salt, the coating material undergoes cross-linking (by autoxidation) and thereby improving its properties, for example its chemical resistance, hardness and/or durability.

Suitable unsaturated fatty acids for providing fatty acid groups include fatty acids derived from soyabean oil, palm oil, linseed oil, tung oil, rapeseed oil, sunflower oil, tallow oil, (dehydrated) castor oil, safflower oil and fatty acids such as linoleic acid, linolenic acid, palmitoleic acid, oleic acid, eleostearic acid, licanic acid, arachidonic acid, ricinoleic acid, erucic acid, gadoleic acid, clupanadonic acid, and/or combinations thereof.

The term alkyd resin is also meant to include modified alkyds for specific applications, like for instance silicon based alkyds, thixotropic alkyds and urethane modified alkyds.

In an embodiment the autoxidisable alkyd resin comprises a hyperbranched alkyd resin or a modified hyperbranched alkyd resin. Hyperbranched macromolecules are often referred to as dendritic species in the art. Hyperbranched macromolecules are three-dimensional highly branched molecules having a tree-like structure. Macromolecules designated as dendrimers are highly symmetric and belong to a particular class of hyperbranched molecules that have a polydispersity index of approximately 1 , whereas macromolecules designated as hyperbranched may to a certain degree be asymmetric and yet maintain a tree-like structure. Methods for preparing hyperbranched or dendritic molecules are known in the art and are described in for example in Tomalia et al (Angewandte Chemie International Edition English, 1990, Vol 29, pp 138-175) and the Encyclopaedia of Polymer Science andEngineering, Volume Index 1990, pp 46-92. Another class of hyperbranched macromolecules are the so-called "star polymers" as described for example in US-A-5731095. Hyperbranched polyesteramides are also described in for example EP 1440107 A1.

By cross-linking by autoxidation is meant that cross-linking results from an oxidation occurring in the presence of air and usually involves a free radical mechanism and is preferably metal-catalysed resulting in covalent cross-links. The coating composition of the invention comprises a binder, which consists of autoxidisable alkyd resin and an autoxidisable material.

The autoxidisable alkyd and the autoxidisable material are different compounds. The autoxidisable alkyd resin can be a mixture of different autoxidisable alkyd resins. Also, the autoxidisable material can be a mixture of different autoxidisable materials.

Additionally to the curing by autoxidation, the binder compounds may also crosslink at ambient temperature by a number of other crosslinking mechanisms including but not limited to Schiff base crosslinking, Michael type additions and radical polymerisation. By Schiff base crosslinking is meant that crosslinking takes place by the reaction of a carbonyl functional group(s), where by a carbonyl functional group herein is meant an aldo or keto group and including an enolic carbonyl group such as is found in an acetoacetyl group, with aldehydes, which are a by-product of oxidative curing. Examples of carbonyl-reactive amine (or blocked amine) functional groups include ones provided by the following compounds or groups: $R-NH_2$, $R-O-NH_2$, $R-O-N=C<$, $R-NH-C(=O)-O-N=C<$ and $R-NH-C(=O)-O-NH_2$ where R is optionally substituted $C_1$ to $C_{15}$, preferably $C_1$ to $C_{10}$ alkylene, optionally substituted alicyclic or optionally substituted aryl, or R may also be part of a polymer. Examples of carbonyl-reactive hydrazine (or blocked hydrazine) compounds or groups include $R-NH-NH_2$, $R-C(=O)-NH-NH_2$, $R-C(=O)-NH-N=C<$, $R-NH-C(=O)-NH-NH_2$ and $R-NH-C(=O)-NH-N=C<$ where R is as described above.

Such secondary curing mechanisms may be ensured by providing the binder compounds, preferably the autoxidisable alkyd resin compound i), with functional groups that may provide further crosslinking, resulting in an even faster drying process of the coating composition.

The functional groups may be attached to compound i) by means of any well-known reactions. Preferred functional groups are acetoacetate and/or (meth)acrylate groups.

The main crosslinking mechanism of the composition according to the invention is by autoxidation, optionally in combination with other crosslinking mechanisms as discussed herein to give a dual (or multiple) curing. Suitably autoxidation is provided for example by fatty acid groups containing unsaturated bonds or by (meth)allyl functional residues, ß-keto ester groups or ß-keto amide groups.

Other crosslinking mechanisms known in the art include the reaction of epoxy groups with amino, carboxylic acid or mercapto groups, the reaction of amine, ß-keto ester groups or mercapto groups with ethylenically unsaturated groups such as fumarate and acryloyl groups, the reaction of mercapto groups with ethylenically unsaturated groups such as fatty acids, the reaction of masked epoxy groups with amino or mercapto groups, the reaction of isothiocyanates with amines, alcohols or hydrazines, the reaction of amines (for example ethylene diamine or multifunctional amine terminated polyalkylene oxides) with ß-diketo (for example acetoacetoxy or acetoamide) groups to form enamines. The use of blocked crosslinking groups may be beneficial.

Another way to insure secondary crosslinking of the binder according to the invention is by providing the alkyd resin component with a (meth)acrylate functionality. A (meth)acrylate-functionalized alkyd resin is an alkyd resin containing reactive (meth)acrylate groups or moieties. The (meth)acrylate-functional alkyd resin may comprise the reaction product of (i) a carboxyl-functional alkyd resin and (ii) a glycidyl (meth)acrylate, the glycidyl moiety of the glycidyl (meth)acrylate being the reactive moiety to functionalize the alkyd resin. The resulting reaction product contains pendant reactive (meth)acrylate moieties.

The (meth)acrylate-functional alkyd resin may also be obtained via other reaction schemes, that is, other sources of acrylate, methacrylate, and vinyl functionality are also suitable for use according to the invention. Thus, an epoxide group is not strictly necessary in the (meth)acrylate, so long as some means for appending the (meth)acrylate or vinyl group to the alkyd resin is available, which means preserves the (meth)acrylate or vinyl functionality.

Suitable (meth)acrylates for functionalizing the alkyd resin thus include tert-butyl acrylate, tert-butyl methacrylate, methyl acrylate, methyl methacrylate, 2-hydroxypropyl (meth)acrylate, 4-hydroxybutyl (meth)acrylate, 2-hydroxyethyl (meth)acrylate, 2-isocyanatoethyl methacrylate, acrylic acid, methacrylic acid, and the like.

Suitable allylic compounds include allyl glycidyl ether, allyl alcohol and epoxybutene, which may be incorporated into the alkyd resin by ring opening of the epoxide. Suitable vinyl compounds include 3-isopropenyl-alpha, alpha-dimethylbenzyl isocyanate, vinyl alcohol, vinyl esters, and the like, which may be incorporated into the alkyd resin, for example, by urethane formation, esterification, or transesterification.

A suitable glycidyl (meth)acrylate may be any substituted or unsubstituted (meth)acrylate containing an epoxide or glycidyl moiety that, upon reaction with a carboxyl- functional alkyd resin, will produce an (meth)acrylate-functional alkyd resin capable of effecting crosslinking during the curing process, each as described above. According to this aspect, upon reaction with a carboxyl- functional alkyd resin, the glycidyl moiety of the glycidyl (meth)acrylate exhibits greater reactivity than the (meth)acrylate moiety, i. e., it is the glycidyl moiety which undergoes reaction with the carboxyl-functional alkyd resin. Suitable substituents for the (meth)acrylate portion of the glycidyl (meth)acrylate include C1 to C18 alkyl groups to form classes of compounds, such as, for example, alkylacrylates (e.g., methacrylates) and crotonates. An especially suitable glycidyl acrylate is glycidyl methacrylate. Preferably compound i) comprises at least 5 wt%, more preferably at least 10 wt% and most preferably at least 15 wt% of glycidyl methacrylate.

Preferably a significant part of any crosslinking reaction only takes place after application of the coating composition to a substrate, to avoid an excessive molecular weight build up which may lead to an increased viscosity of the coating composition on the substrate in the early stages of drying. Even worse, the viscosity can become too high to apply the coating composition and in the worst case the composition will gel in the can.

Preferably at least 5 wt.% of components (i) and (ii) taken together has a weight average molecular weight Mw of 120 000 gmol$^{-1}$ or more.

More preferably at least 10 wt.% of components (i) and (ii) taken together has a weight average molecular weight Mw of 100 000 gmol$^{-1}$ or more, preferably 120 000 gmol$^{-1}$ or more.

At least 30 wt.% of components (i) and (ii) taken together has a molecular weight in the range of 2 200 to 4 000 gmol$^{-1}$. Preferably at least 25 wt.% of components (i) and (ii) taken together has a molecular weight in the range of 2 500 to 3 500 gmol$^{-1}$.

Preferably at most 10 wt.% of components (i) and (ii) taken together has a weight average molecular weight Mw of 1 700 gmol$^{-1}$ or less, preferably 1500 gmol$^{-1}$ or less. More preferably at most 7 wt.% of components (i) and (ii) taken together has a weight average molecular weight Mw of 1 500 gmol$^{-1}$ or less.

The advantage of having the molecular weight distribution in the ranges described above is that a higher degree of shear thinning viscosity behaviour is obtained, possibly due to a higher degree of molecular chain entanglements.

The polydispersity index (PDI) is a measure of the distribution of molecular mass in a given polymer sample. The polydispersity index can be calculated by division of the weight average molecular weight Mw by the number average molecular weight Mn. It indicates the distribution of individual molecular masses in a batch of polymers. The polydispersity index has a value which is always one or more (i.e Mw $\geq$ Mn), but as the polymer chains approach uniform chain length, the polydispersity index approaches the unity (PDI $\rightarrow$ 1).

The polydispersity index (PDI) of the autoxidisable material (component ii)) is in the range of from 1 to 2.0 and preferably is in the range of from 1 to 1.5. The narrow polydispersity of the molecular weight of the autoxidisable material was found to be important to avoid unwanted phenomena, such as for example wrinkling of the coating during drying.

Preferably the autoxidisable alkyd resin has a z-average molecular weight Mz of 90 000 gmol$^{-1}$ or more. The Mz is the Z average molecular weight and a full definition is given in "Principles of Polymer Systems" F Rodriguez, published 1983 by McGraw-Hill International pp127-129.

The binder preferably has an Mp in the range of 1 900 to 4 000 gmol$^{-1}$, more preferably in the range of 2 000 to 3 500 gmol$^{-1}$. The Mp is the molecular weight with the highest signal (i.e. the apex of the peak) in a chromatogram resulting from the measuring of the molecular weight. The Mp is also known as the peak Mw. Mp values are discussed in Modern Size Exclusion Liquid Chromatography, W. W. Yau, J. K. Kirkland and D. D. Bly, John Wiley & Sons, USA, 1997.

The specific distribution of the molecular weights of the components i) and ii) of the binder according to the invention is defined by means of the range of Mp to represent the lower molecular weight fraction corresponding to component ii) and the range of Mz to represent the higher molecular weight fraction corresponding to component i).

The weight average molecular weight Mw of the autoxidisable alkyd resin as determined by gel permeation chromatography is preferably at least 30 000 gmol$^{-1}$, more preferably at least 50 000 gmol$^{-1}$, and most preferably at least 60 000 gmol$^{-1}$. Alkyd resins with a weight average molecular weight of more than 200 000 gmol$^{-1}$ tend to be very viscous and result in autoxidisable coating compositions that are more difficult to apply with a brush. However, other techniques may be employed to apply such coatings to a substrate. Preferably, however, the weight average molecular weight of the autoxidisable alkyd resin is at most 200 000 gmol$^{-1}$, more preferably at most 150 000 gmol$^{-1}$.

The content (wt %) of a fatty acid in an alkyd resin is related to the oil length. The oil length is defined as the number of grams of fatty acid (calculated as its triglyceride) used to produce 100 g of the alkyd resin. This oil length is closely related to the physical properties of for example paint formulations comprising a composition according to the invention, such as solubility, hardness, gloss, colour retention, weather resistance, hardening time and durability. It was found advantageous for the viscosity if the autoxidisable alkyd resin has an oil length of 50 % or more, preferably 55 % or more, more preferably 60 % or more, even more preferably 70 % or more and most preferably 80 % or more.

The autoxidisable alkyd resin component i) in the autoxidisable coating composition of the invention comprises at least 20 wt.% of autoxidisable alkyd resin, preferably at least 30 wt.%, more preferably at least 40 wt.%. The upper limit of the amount of the autoxidisable alkyd resin in the resin component is 70 wt.%, and preferably 60 wt.%.

The autoxidisable material component ii) in the autoxidisable coating composition of the invention comprises at least 30 wt.% of autoxidisable material, preferably at least 40 wt.%. In an embodiment, the upper limit of the amount of autoxidisable material in the autoxidisable coating composition of the invention is 60 wt.%,.In a preferred embodiment said upper limit is 70 wt.%

The amount of component i) and component ii) is chosen such as to ensure that at least 5 wt.% of the binder has a weight average molecular weight Mw of 100 000 gmol$^{-1}$ or more; at least 30 wt.% of the binder has a weight average molecular weight Mw in the range of 2 000 to 4 000 gmol$^{-1}$; and furthermore the binder has an Mp in the range of 1 700 to 4 500 gmol$^{-1}$.

The weight average molecular weight Mw of the autoxidisable material as determined by gel permeation chromatography is preferably at least 2 000 gmol$^{-1}$, and more preferably at least 2 500 gmol$^{-1}$. Preferably, the weight average molecular weight of the applied autoxidisable material is at most 4 000 gmol$^{-1}$, and more preferably at most 3 500 gmol$^{-1}$. Preferably the autoxidisable material has a weight average molecular weight of from 2 000 to 4 000 gmol$^{-1}$ and more preferably from 2 500 to 3 500 gmol$^{-1}$.

The autoxidisable material comprises a polyol fatty acid polyester. The polyol fatty acid polyester comprises at least 3 fatty acid groups, preferably at least 4 fatty acid groups and in particular at least 5 fatty acid groups. The polyol fatty acid polyester can for example have at most 12 fatty acid groups, in particular at most 9 fatty acid groups. Preferably the polyol fatty acid polyester comprises from 4 to 12 fatty acid groups, more preferably from 5 to 9 fatty acid groups.

The nature of the fatty acid groups in the autoxidisable material is not particularly critical. Suitable preferred examples include fatty acids from soyabean oil, safflower oil, linseed oil, dehydrated castor oil and/or tall oil fatty acid. The fatty acids are preferably unsaturated, i.e. contain double bonds for reacting with the autoxidisable alkyd resin of the invention in the same manner as in traditional alkyds.

It is further preferred that the autoxidisable material comprises at least one ether group, more preferably the autoxidisable material comprises from 1 to 5 ether groups.

Suitable polyol fatty acid polyester that can be applied in the autoxidisable coating composition of the invention can be based on polyols such as trimethylol propane, glycerol, polyglycerol, sorbitol, mannitol, glucose, pentaerythritol, dipentaerythritol, tripentaerythritol, ditrimethylolpropane and disaccharides (such as sucrose). Preferred polyols include dipentaerythritol and tripentaerythritol. Accordingly, the autoxidisable material to be used in the autoxidisable coating composition of the present invention is preferably a fatty acid ester of dipentaerythritol or tripentaerythritol. It is also possible that the autoxidisable material comprises a mixture of different polyol fatty acid esters.

The autoxidisable coating composition of the invention can have exceptionally high solids content without adversely affecting the physical properties of the coating. The solids content of the composition can for instance be at least 60 wt.% based on the total weight of the composition, preferably at least 70 wt.%. In theory, a solids content of the composition can be 100 wt.% due to the relatively low molecular weight of the autoxidisable material. In practice, the upper limit of the solids content of the composition can be for instance 95 wt.%, or even 98 wt.%.

The autoxidisable coating composition has a pseudoplasticity index of 1.5 or more, preferably 2.0 or more, and most preferably 2.5 or more. The pseudoplasticity index as used in this application is meant to refer to the viscosity at a shear rate of 1 s$^{-1}$, divided by the viscosity at a shear rate of 5 000 s$^{-1}$, both measured at 23 °C +/- 3 °C. The advantage of a high pseudoplasticity index is a favourable resistance against dripping and sagging of the paint, while maintaining low brush resistance.

Furthermore, the autoxidisable coating composition of the invention enables a strong reduction of the amount of volatile organic compounds. This is very advantageous in view of the legislative restrictions on volatile organic compounds. It is for instance possible to have an autoxidisable coating composition with a volatile organic compounds content (VOC) of 300 gl$^{-1}$ or less at a viscosity of ≤ 1 Pas, preferably ≤ 0.6 Pas at 23 °C and a shear rate of 5 000 s$^{-1}$. This reduction allows complying with the 2010 EU legislation of a volatile organic compound content of at most 300 gl$^{-1}$.

Preferably the volatile organic compounds amounts ≤ 300 gl⁻¹, more preferably ≤ 290 gl⁻¹, even more preferably ≤ 285 gl⁻¹ and most preferably ≤ 250 gl⁻¹ from the total amount of the autoxidisable coating composition of the invention. In the examples according the invention the concentration of volatile organic compounds was usually chosen to be around 250 gl⁻¹.

In a further aspect the invention is directed to a method for preparing an autoxidisable coating composition of the invention comprising for example mixing at elevated temperature the autoxidisable alkyd resin with the autoxidisable material. By elevated temperature here is meant a temperature suitable to make the two components of the invention workable from viscosity point of view (i.e. mixable one into the other). The mixing temperature is preferably ≥ 50 °C but below the boiling temperature of the solvent(s), even more preferably ranging from 50 to 100 °C. The mixing of the two components may be done in any order.

The composition of the invention is particularly suitable for use in coatings or coating compositions in which it may provide a key part of coating compositions or formulations. Such coating compositions can be pigmented or unpigmented and may be used as primer, as a topcoat, as a high-gloss or matt coating, as a stain-resistant coating, a wood oil, a wall paint or a flooring paint.

In yet a further aspect the invention is directed to a paint comprising an autoxidisable coating composition according to the invention. The term "paint" in this respect is meant to designate collectively coating materials such as paints, varnishes, enamels, and the like lacquer for architectural or industrial use for indoor as well as for outdoor applications.

Accordingly, in a further embodiment of the invention there is provided a coating, a polymeric film, a printing ink and/or an overprint lacquer obtainable from the composition of the present invention.

The composition of the invention may be used in various applications, and for such purposes may be further optionally combined or formulated with other additives or components (to form compositions), such as pigments (for example titanium dioxide, iron oxide, chromium based compounds and/or metal pthalocyanine compounds), dyes, defoamers, rheology control agents, thixotropic additives, thickeners, dispersing and stabilising agents (usually surfactants), heat stabilisers, matting agents such as silica, wetting agents, levelling agents, anti-cratering agents, fillers, extenders, sedimentation inhibitors, UV absorbers, antioxidants, drier salts, fungicides, bacteriocides, waxes, organic co-solvents, wetting agents and the like introduced at any stage of the production process or subsequently. It is possible to include an amount of antimony oxide to enhance the fire retardant properties.

The composition of this invention may also contain various other ingredients such as extenders (e.g. calcium carbonate and china clay) and dispersants such as pigment dispersion aids.

Such additives are commercially available. However, it is to be understood that these additives are not needed to obtain the properties as described in this invention and they are not added when they negatively affect the coating properties.

The formulations comprising the composition of the invention may be mixed in organic solvent. However, ≤ 10 wt% water based on total formulation may be added to the composition without influencing its properties. Adding water is understood herein as adding an additional cosolvent and not as a medium for emulsification.

The organic solvent is typically present as about 5 to about 40 weight %, preferably about 5 to about 30 weight %, most preferably about 5 to about 18 weight %, of the coating composition. Suitable organic solvents are well-known in the art and, in principle, all can be used in the coating compositions contemplated herein.

Non-limiting examples of suitable organic solvents are aliphatic, cycloaliphatic, and aromatic hydrocarbons, alcohol ethers, and alcohol ether acetates or mixtures thereof. As examples of such solvents may be mentioned hydrocarbon solvents available under the trademarks Shellsol H, Shellsol K, and Shellsol AB, all from Shell Chemicals, the Netherlands; the trademarked Solvesso 150, Exxsol D30, Exxsol D40 and Exxsol D60 solvents from Esso; ester solvents such as ethyl diglycol, ethyl glycol acetate, butyl glycol, butyl glycol acetate, butyl diglycol, butyl diglycol acetate, and methoxypropylene glycol acetate; and ketone solvents like methyl ethyl ketone (MEK), acetone, methyl isobutyl ketone (MIBK) and methyl amyl ketone (MAK). Mixtures of solvents may also be used. Preferably the solvent is an aliphatic solvent and most preferably the solvent is Exxsol D40.

In a further aspect the invention is directed to a method for applying the autoxidisable coating composition of the invention on a substrate, comprising adding to the coating composition a drier salt and drying the coating composition.

Cross-linking by autoxidation is initiated on drying and occurs by reaction with atmospheric oxygen optionally with the use of catalysts known as drier salts. Drier salts are preferably comprised in the autoxidisable coating composition of the invention. Examples of suitable drier salts include polyvalent salts containing cobalt, calcium, copper, zinc, iron, zirconium, manganese, barium, zinc, strontium, lithium and potassium as the cation and halides, nitrates, sulphates, acetates, naphthenates or acetoacetonates as the anion. The amount of drier salt used can be in the range of from 0 to 1 wt.% metal content by weight of the total amount of solid binder composition.

The composition once applied may be allowed to dry naturally at ambient temperature and more preferably the drying process may be accelerated by heat at a temperature in the range of from 10 to 28 °C.

In yet a further aspect the invention is directed to a substrate coated with the autoxidisable coating composition of the invention. Suitable substrates include wood, metal, stone, plastics and plastic films like polyethylene or polypropylene, especially when the films are treated with plasma; fibre (including hair and textile), glass, ceramics, plaster, asphalt, concrete, leather, paper, foam, masonry and/or board. Wood and wooden based substrates like MDF (medium density fibreboard) or chip boards are the most preferred substrates.

Application to a substrate may be by any conventional method including brushing, dipping, flow coating, spraying, roller coating, pad coating, flexo printing, gravure printing, ink-jet printing, any other graphic arts application methods and the like. For spraying, further dilution of the composition with a solvent (for example acetone) may be needed to achieve the best results.

There is further provided according to the invention a substrate carrying a pigmented or non-pigmented coating derived from a coating composition of the invention.

There is further provided according to the invention a method of coating a substrate which comprises applying a coating composition obtained by a process as defined above to a substrate and drying the composition to obtain a coating. The coating according to the invention may be primer coating or a topcoat.

The autoxidisable coating composition of the invention can further be advantageously applied in one or more of the following applications: adhesives (such as pressure sensitive adhesives, hot melt, contact and laminating adhesives or adhesion promoters), high yield primers, high yield topcoats, metal applications as used already for alkyds (coils, drums, chairs), inks, toners, wetting agents, pigment dispersants, paper coatings, automotive protective and maintenance, flexible packaging, coil coatings, sheet moulding, powder coatings, and spray paints.

The present invention is now further illustrated but in no way limited by reference to the following examples. Unless otherwise specified all parts, percentages and ratios are on a weight basis. The term comparative means that it is not according to the invention.

Measuring techniques

Viscosity

As used herein, with the term "viscosity" is meant to refer to the viscosity measured with a Physica MCR301 rheometer using a cone/plate measuring system characterised by a cone diameter of 25 mm and a cone angle of 1 °. Two types of viscosity measurements were performed: 1) flow curves have been measured at a temperature of 23 °C as a function of shear rate, to show the shear thinning behaviour of the viscosity; and 2) stepwise shear-rate viscosity measurements to determine the pseudoplasticity index.

For the flow-curve measurements, within a time interval of 90 s subsequently, the shear rate of 5 000 s$^{-1}$ is after 5 seconds of waiting time, stepwise reduced down to 1 s$^{-1}$, immediately followed by an identical shear rate increase up to 5 000 s$^{-1}$.

Viscosity measured within the shear rate range of 20 to 40 s$^{-1}$ is considered to be responsible for the resistance of the paint against dripping from the brush.

Viscosity measured at a shear rate of 5 000 s$^{-1}$ is considered to be responsible for the 'brush resistance' experienced during applying the paint (= application viscosity).

Viscosity measured at a shear rate of 1 s$^{-1}$ is considered to be responsible for the 'sag resistance' experienced after application of the paint.

For the viscosity measurements to determine the pseudoplasticity index, the viscosity measurement at 5000 s$^{-1}$ is performed 5 s after switching the shear-rate from 0 s$^{-1}$ up to 5000 s$^{-1}$ and the viscosity measurement at a shear rate of 1 s$^{-1}$ is performed 5 s after switching the shear-rate from 5000 s$^{-1}$ down to 1 s$^{-1}$.

VOC

Where a VOC of a pigmented film forming material is mentioned below, it refers to the VOC measured after pigmenting the binder with $TiO_2$ up to a PVC value of 15 wt% adding cobalt, zirconium, calcium and Exkin 2 (anti-skinning agent from Condea) and diluting this paint with Exxsol D40 down to a viscosity value of 0.6 Pa-s, measured at 23 °C and 5 000 s$^{-1}$. Determination of VOC was done as following: first measure specific weight of the paint (kg/m$^3$); then the solid content (%) was measured and then the VOC was calculated according to the formula:

$$\text{VOC in gl}^{-1} = ((100 - \text{solids content}) * \text{density}) / 100$$

The method to determine VOC is ISO 1 1890-1 : 2000(E).
The density of the compositions was measured according to ISO 281 1-2: 1997(E).

The method to determine the volatile percentage was according to ISO 3251 : 1993(E).

Molecular weights

The molecular weights referred to in this application are the values as determined on an Alliance Waters 2695 GPC with two consecutive PL-gel columns, type Mixed-B, l/d = 300/7.5 mm (Polymer Laboratories), size of column particles 10 $\mu$m, using stabilised tetrahydrofuran (THF)(BHT stable) modified with 0.8% acetic acid as the eluent at 1 mL/min at 40 °C and using an Alliance Waters 2414 refractive index detector at 40°C. A set of polystyrene standards with a molecular weight range of 162 to $7.10^6$ gmol$^{-1}$ is used to calibrate the GPC equipment.

The drying properties

From a practical point of view it makes sense to discriminate between 3 stages of drying. The first stage of drying is finished when the autoxidation results into solidification of the surface of the film. The very moment of surface solidification is quantified by the Cotton Wool Adhesion Test.

The cotton wool adhesion test measures the rate of surface drying of a coating film. The cotton wool adhesion test was conducted on a coating film applied with a 100 $\mu$m slit applicator on a glass plate. After applying the coating composition, a swatch of cotton wool (a lose ball of approximately 0.2 g and a diameter of approximately 3 cm) was dropped from a height of 5 cm on the paint film. After 10 seconds the glass panel was turned over 180° and it was observed if the cotton wool drops off without leaving cotton fibres on the surface. When the cotton wool did not stick to the surface, the time was recorded.

The second stage of drying is finished when the coating film has been solidified over its full film height. The drying stage must be finished as soon as possible in order to achieve anti-blocking properties and to enable sanding of the coating film after one night drying. This 'in-depth' solidification of the coating film is quantified by the Indentation Test, as described below.

Indentation test

The extent of in-depth curing (i.e. solidification) was measured as a function of the drying time on a coating film applied on a glass plate with a 200 $\mu$m slit applicator. The glass plate was positioned on the bottom plate of a Physica MCR 301 rheometer and the distance between the glass plate and the indentor was determined. Subsequently a rod-shaped indentor with a diameter of 3.5 mm was pressed on to the paint film with a force of 20 N. As long as the lower part of the paint film was not sufficiently cured to withstand the pressure applied, it was squeezed out between the indentor and the glass plate. The distance between the tip of the indentor and the glass plate that remained after 5 minutes pressing as determined by the Physica MCR 301 rheometer was used as a measure for the in-depth drying. The larger this distance was, the better the in-depth drying. The test was performed at 23 °C.

Hardness test

After completion of the in-depth solidification the coating hardness can be measured. The hardness on 22 $\mu$m thick films was measured after 24 hours drying, using two different techniques: a traditional Labotron pendulum hardness tester was used to measure the Konig pendulum hardness. A Physica MCR 301 rheometer was used to quantify the dynamic modulus of elasticity (Go) as a measure for the coating hardness, according to the following procedure:

After 24 hours of drying, the solidified films were removed from their glassy substrate with a razor blade. Subsequently, the free films were folded into 16 layers in order to achieve sufficient sample height for an accurate oscillatory shear deformation. Pill-shaped samples (with a diameter of 8 mm and a height of about 300 $\mu$m) were then made out of the stacked films. At a temperature of 80 °C, the sample was clamped in between the parallel plates of the rheometer, applying a normal force of 30 Newton. Subsequently the sample was cooled down from 80 °C to -20 °C at a cooling rate of 4 °C/min. While cooling down the sample was subjected to a very small oscillatory shear deformation $\gamma$(t) with amplitude $\gamma_o$ of 0.002 and at a frequency of 1 Hz. Both the oscillating deformation $\gamma$(t) and the resulting oscillating shear stress $\tau$(t) were measured as a function of temperature. The hardness of a visco-elastic solid material like a cured paint can be considered to be proportional to the ratio of the shear stress amplitude $\tau_o$ and the shear deformation amplitude $\gamma_o$. This ratio is called the dynamic modulus of elasticity and is denoted by $G_o$: Hardness $\infty$ $G_o = \tau_o/\gamma_o$.

After completion of the in-depth solidification the autoxidation process continued. This was reflected by a continuous increase of the hardness of the film.

Preparation of an autoxidisable alkvd resin (compound i)

529 g of soyabean oil, 125 g of pentaerythritol and 0.8 g of Nuodex Li2 (catalyst from Nuodex) were charged to the reactor and heated to 245 °C. The temperature was maintained at 245 °C for 1 hour. The reactor was cooled to 150 °C and 229 g of phthalic anhydride, 2.5 g of maleic anhydride and 34 g of xylene was charged to the reactor. The reactor was heated to 245 °C under azeotropic conditions and the distillation was stopped when the acid value reached 8 to 12 mg KOH/g resin and the viscosity was 19 dPas at 100 °C. The reactor was then cooled to 190 °C and vacuum distillation was started until the acid value reached 5 to 10 mg KOH/g resin and the viscosity was 47 dPas at 100 °C. Then, the reactor was cooled to 150 °C and discharged.

The average molecular weights were established by gel permeation chromatography technique, and Mn was 4 990 gmol$^{-1}$, the Mw was 1 15 000 gmol$^{-1}$, the Mz was 453 000 gmol$^{-1}$ and the Mp was 1 830 gmol$^{-1}$.

Preparation of an autoxidisable material (compound N) of a soya ester of dipentaerythritol

1108 g of soya fatty acid, 160 g of dipentaerythritol and 50 g of xylene were charged to a reactor and heated to 250 °C under azeotropic conditions. Distillation was stopped when the acid value reached 10 to 15 mg KOH/g for the autoxidisable material. Finally, the xylene was stripped under vacuum conditions at 200 °C. Thereafter, the autoxidisable material was discharged. The average molecular weights were established by gel permeation chromatography. Mn was 2 000 gmol$^{-1}$ and Mw was 2 600 gmol$^{-1}$.

Preparation of a comparative autoxidisable alkvd resin (comparative component i)

419 g of soyabean oil, 73 g of pentaerythritol, 34 g of soyabean oil fatty acid, 32 g of glycerol and 0.7 g of Nuodex Li2 were charged to the reactor and heated to 260 °C. The temperature was maintained at 260 °C for 1 hour. The reactor was cooled to 150 °C and 170 g of phthalic anhydride, 5.6 g of maleic anhydride and 28 g of xylene was charged to the reactor. The reactor was heated to 240 °C under azeotropic conditions and the distillation was stopped when the acid value reached 7-12 mg KOH/g for the alkyd resin and the viscosity was 60 dPas at 23 °C, 70 % solids dissolved in Exxsol D40 (non-aromatic solvent from Exxon). The reactor was then cooled to 190 °C and the xylene was stripped out. Then the reactor was cooled to 150 °C and discharged.

The average molecular weights were established by gel permeation chromatography technique, and Mn was 3 900 gmol$^{-1}$, the Mw was 22 900 gmol$^{-1}$, the Mz was 73 800 gmol$^{-1}$ and the Mp was 1 830 gmol$^{-1}$.

Preparation of binders

Two binders were prepared, by mixing in weight ratios specified below: 1) compound i) with compound ii); and 2) comparative compound i) with compound ii) prepared according to the procedure described above. Further, two paint compositions were formulated as described below and tested for their properties.

Formulation of paints

The following ingredients listed in Table 1 below were added to a high speed dissolver at ambient temperature to form a pigment paste.

Table 1

|  | Weight % |
| --- | --- |
| Binder (90 wt% in Exxsol D40) | 16.00 |
| Tioxide TR 92 (Titanium Dioxide Pigment) | 32.20 |
| Nuosperse FA 601 (Wetting agent) | 0.32 |
| Exxsol 040 | 1.00 |

The agitator blade of the mixer was rotated with a speed of 20 m/s at the tip of the blade for about 10 to 15 minutes. Stirring was continued and the following further ingredients listed in Table 2 were added. Ingredients of Table 2 were added while stirring one after each other, however, separate mixing of the ingredients of Table 2 and addition after that to the pigment paste is also possible since any order in mixing the components is suitable.

Table 2

|  | Weight % |
|---|---|
| Binder (90 wt% in Exxsol D40) | 32.80 |
| 10 wt.% solution of cobalt autoxidation catalyst | 0.32 |
| 5 wt.% solution of calcium compound | 0.95 |
| 12 wt.% solution of zirconium compound | 1.61 |
| Exkin 2 (Anti skinning agent) | 0.25 |
| Exxsol D40 (to obtain 0.6 Pa·s application viscosity) | 7.55 |
| Total | 100.00 |

Gentle stirring of the formulation was resumed for another 5 minutes after having mixed in all ingredients of Table 2 to obtain a homogeneous composition. Part of Exxsol D40 was added afterwards for adjustment of viscosity and thus paint compositions were produced having a viscosity of 0.6 Pas as determined by measurement done at a shear rate of 5 000 s$^{-1}$ and 23 °C.

Preparation of paint 1 comprising a binder according to the invention (sample 1)

The binder of sample 1 consisted of a blend of the autoxidisable alkyd resin (component i) and the autoxidisable material (component ii) each prepared according to the procedure described above, where the two compounds i) and ii) were mixed in the weight ratio 47.4/52.6 respectively. The additional ingredients are as described above in Tables 1 and 2. The paint had a density of 1 256 kgm$^{-3}$, a solids content of 80.5 % and the resulting VOC was 245 gl$^{-1}$, determined according to the ISO methods given above.

Preparation of comparative paint 2 (sample 2)

The binder of sample 2 consisted of a blend of the comparative autoxidisable alkyd resin (comparative component i) and the autoxidisable material (component ii) each prepared according to the procedure described above, where the two compounds comparative i) and ii) were mixed in the weight ratio 63.5/36.5 respectively. The additional ingredients are as described above in Tables 1 and 2. The paint had a density of 1 273 kgm$^{-3}$, a solids content of 80.8 % and the resulting VOC was 244 gl$^{-1}$, determined according to the ISO methods given above.

Table 3 summarises the main characteristics of the binder components and of the binders used in the preparation of samples 1 and 2 (comparative).

Table 3

|  | Sample 1 | Sample 2 (comparative) |
|---|---|---|
| Fraction of autoxidisable alkyd resin (i) | 47-4 weight% | 63.5 weight% |
| Fraction of autoxidisable material (ii) | 52.6 weight% | 36.5 weight% |
| $M_n$ autoxidisable alkyd resin (i) | 4 990 gmol$^{-1}$, | 3 900 gmol$^{-1}$ |
| $M_w$ autoxidisable alkyd resin (i) | 115 000 gmol$^{-1}$ | 22 900 gmol$^{-1}$ |
| $M_z$ autoxidisable alkyd resin (i) | 453 000 gmol$^{-1}$ | 73 800 gmol$^{-1}$ |
| $M_p$ autoxidisable alkyd resin (i) | 1 830 gmol$^{-1}$ | 1 830 gmol$^{-1}$ |
| $M_n$ autoxidisable material (ii) | 2 000 gmol$^{-1}$ | 2 000 gmol$^{-1}$ |
| $M_w$ autoxidisable material (ii) | 2 600 gmol$^{-1}$ | 2 600 gmol$^{-1}$ |
| $M_p$ autoxidisable material (ii) | 2 570 gmol$^{-1}$ | 2 570 gmol$^{-1}$ |
| PDI autoxidisable material (ii) | 1.3 | 1.3 |
| Oil length autoxidisable material (ii) | 88 | 88 |

(continued)

|  | Sample 1 | Sample 2 (comparative) |
|---|---|---|
| wt.% of the components (i) and (ii) taken together having a weight average molecular weight Mw of 100 000 gmol$^{-1}$ or more | 13.2 weight% | 2.9 weight% |
| wt.% of components (i) and (ii) taken together having a weight average molecular weight Mw in the range of 2 000 to 4 000 gmol$^{-1}$ | 46 weight% | 39 weight% |
| wt.% of components (i) and (ii) taken together having a weight average molecular weight Mw in the range of 2 500 to 3 500 gmol$^{-1}$ | 26 weight% | 21 weight% |
| wt.% of components (i) and (ii) taken together having a weight average molecular weight Mw < 1700 gmol$^{-1}$ | 9 weight% | 11 weight% |
| wt.% of components (i) and (ii) taken together having a weight average molecular weight Mw < 1500 gmol$^{-1}$ | 7 weight% | 8 weight% |
| Mp of components (i) and (ii) taken together | 2 570 gmol$^{-1}$ | 2 570 gmol$^{-1}$ |

Properties of samples 1 and 2

The main properties of the two samples are summarized in the Figures and the Table 4.

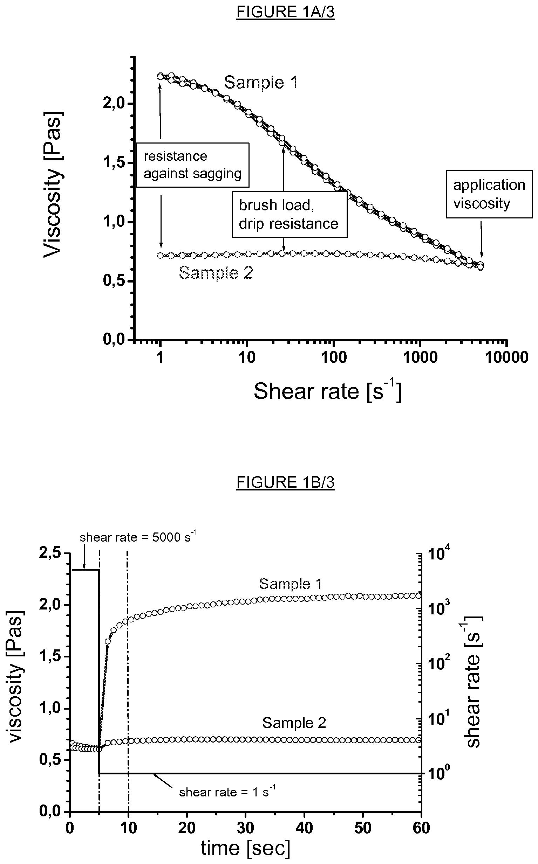

Figure 1A (flow-curves measured at 23 °C) shows that paint 2 (sample 2) is characterised by the typical Newtonian (constant) viscosity profile of a high solid paint. Paint 1 (sample 1) on the contrary displays distinct, favourable, shear-thinning behaviour. The extent of shear-thinning has been expressed by the pseudoplasticity index. The determination of the pseudoplasticity index has been visualized in figure 1B. The pseudoplasticity index of paint 1 (sample 1) = 1.85/0.61 = 3.0. The pseudoplasticity index of paint 2 (sample 2) = 0.68/0.60 = 1.13. The high pseudoplasticity index causes paint 1 to show good resistance against sagging and dripping in contrast with sample 2.

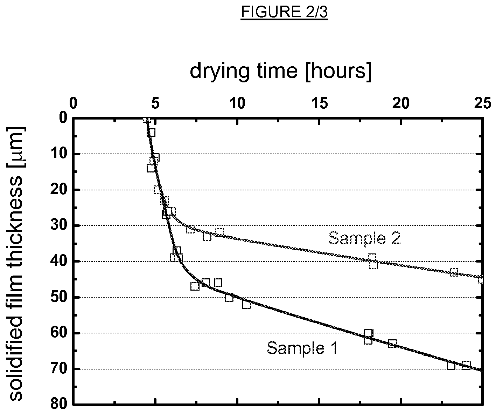

Figure 2 (solidification front as a function of drying time) shows the large improvement of the in-depth drying of paint 1 (sample 1) as compared to paint 2 (sample 2). This improved in-depth drying is responsible for fast resistance to blocking, fast sandability and fast damage resistance.

From Table 4 it can be seen that the large improvement of the in-depth drying of paint 1 has been accomplished without any decline of the dust free time or the Konig pendulum hardness. Only the modulus of elasticity, $G_o$, is slightly less as compared with sample 2.

For both paints the modulus of elasticity, $G_o$, is low enough to ensure good flexibility of the paint films.

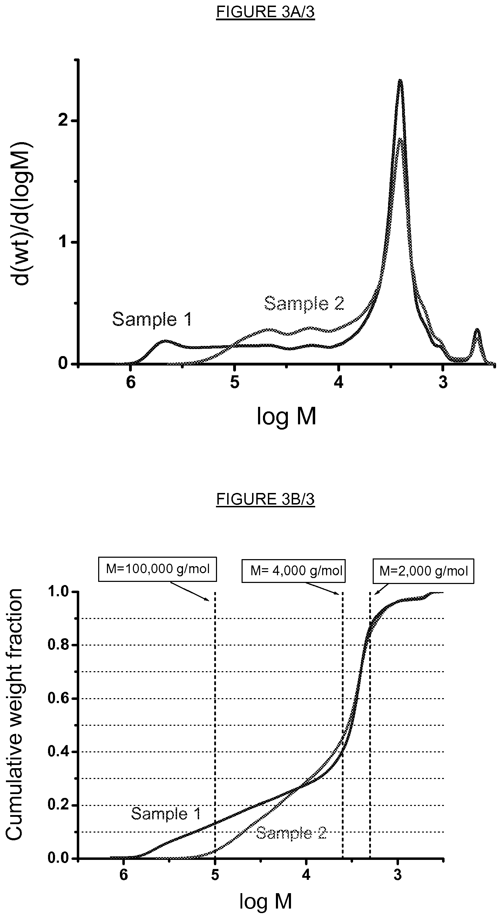

Figure 3 (gel permeation chromatography measurements) comprising two graphs (Figure 3A and Figure 3B) for the same data and Table 3 show the difference in molecular weight distribution between the binders of paint 1 (sample 1) and comparative paint 2 (sample 2), being responsible for the above-mentioned properties. Herein, the distribution of the molecular weight is determined by the specific choice of the wt% of the binder components. As seen in Figure 3A, the binder of sample 1 had a higher value of the Mw (higher maximum value at the peak) and in Figure 3B a higher amount in wt% of binder fraction having a Mw of 100 000 gmol$^{-1}$ or more, compared to sample 2.

Table 4

|  | Sample 1 | Sample 2 (comparative) |
|---|---|---|
| Pseudoplasticity factor | 3.0 | 1.13 |
| Dust free time (Cotton Wool Adhesion) | 3 hours 30 min | 3 hours 30 min |
| Solidified film height after 10 hours | 50 $\mu$m | 33 $\mu$m |
| Solidified film height after 20 hours | 63 $\mu$m | 41 $\mu$m |
| König pendulum hardness at 20°C; at 22 $\mu$m dry film height after 24 hours drying | 28 | 24 |
| Modulus of elasticity, $G_o$, at 20 °C; at 22 $\mu$m dry film height after 24 hours drying | $3.9*10^6$ Pa | $5.1*10^6$ Pa |

**Claims**

1. Autoxidisable coating composition comprising a binder consisting of components:

   (i) 20 to 70 wt.% of autoxidisable alkyd resin with
   an Mz of 80 000 gmol$^{-1}$ or more; and
   (ii) 30 to 80 wt.% of an autoxidisable material comprising at least 3 fatty acid groups, wherein the autoxidisable material has
   an Mp in the range of 1 700 to 4 000 gmol$^{-1}$;
   a polydispersity index (PDI) in the range of 1 to 2;
   an oil length of 50 % or more;
   wherein

      (a) the molecular weight distribution of components (i) and (ii) in the binder is such that
      at least 5 wt.% of the components (i) and (ii) taken together has a weight average molecular weight Mw of 100 000 gmol$^{-1}$ or more;
      at least 30 wt.% of components (i) and (ii) taken together has a weight average molecular weight Mw in the range of 2 000 to 4 000 gmol$^{-1}$; and
      (b) the binder consisting of components (i) and (ii) has an Mp in the range of 1 700 to 4 500 gmol$^{-1}$,

   said molecular weights Mw, Mz and Mp being determined by gel permeation chromatography in THF using polystyrene standards.

2. Autoxidisable coating composition according to claim 1, wherein compound i) is functionalised with acetoacetate and/or glycidyl (meth)acrylate.

3. Autoxidisable coating composition according to any one of the preceding claims having a degree of pseudoplasticity of 1.5 or more, wherein the degree of pseudoplasticity is the viscosity at a shear rate of 1 s$^{-1}$, divided by the viscosity at a shear rate of 5 000 s$^{-1}$, both measured at 23 °C +/- 3 °C.

4. Autoxidisable coating composition according to any one of the preceding claims having a degree of pseudoplasticity of 1.5 or more upon dilution with solvent to an application viscosity within the range of 0.1 to 1 Pas, wherein the degree of pseudoplasticity is the viscosity at a shear rate of 1 s$^{-1}$, divided by the viscosity at a shear rate of 5 000 s$^{-1}$, both measured at 23 °C +/- 3 °C..

5. Autoxidisable coating composition according to claim 1, diluted to a viscosity $\leq$ 1.0 Pas, as measured at a shear-rate of 5000 s$^{-1}$ and a temperature of 23 °C, by adding $\leq$ 300 gl$^{-1}$ of composition, of Exxsol D40, up to a maximum of 300 gl$^{-1}$ of VOC, wherein Exxsol D40 is a hydrocarbon fluid having initial boiling point of typically 153 to 160 °C, a density at 15 °C of 0.77 kg/dm$^3$ and a viscosity at 25 °C of 1.25 mm$^2$/s.

6. Autoxidisable coating composition according to any one of the preceding claims, wherein said autoxidisable material has a weight average molecular weight as determined by gel permeation chromatography of 2 000 to 4 000 gmol$^{-1}$.

7. Autoxidisable coating composition according to any one of the preceding claims, wherein said autoxidisable material comprises at least one ether group.

8. Method for preparing an autoxidisable coating composition according to any one of claims 1 to 7, comprising mixing said autoxidisable alkyd resin with said autoxidisable material.

9. Paint comprising an autoxidisable coating composition according to any one of claims 1 to 7.

10. Method for applying the autoxidisable coating composition according to any one of claims 1 to 7 on a substrate, comprising adding to the coating composition a drier salt and drying the coating composition.

11. Substrate coated with the autoxidisable coating composition according to any one of claims 1 to 7.

12. Use of the autoxidisable coating composition according to any one of claims 1 to 7 in the preparation of indoor and outdoor coatings

**Patentansprüche**

1. Autoxidierbare Beschichtungszusammensetzung, umfassend ein Bindemittel bestehend aus Komponenten:

   (i) 20 bis 70 Gew.-% autoxidierbarem Alkydharz mit einem Mz von 80000 gmol$^{-1}$ oder mehr; und
   (ii) 30 bis 80 Gew.-% eines autoxidierbaren Materials, umfassend mindestens 3 Fettsäuregruppen, wobei das autoxidierbare Material aufweist:

   ein Mp im Bereich von 1700 bis 4000 gmol$^{-1}$;
   einen Polydispersitätsindex (PDI) im Bereich von 1 bis 2;
   eine Öllänge von 50 % oder mehr;

   wobei

   (a) die Molekulargewichtsverteilung von Komponenten (i) und (ii) im Bindemittel derart ist, dass mindestens 5 Gew.-% der Komponenten (i) und (ii) zusammen genommen ein gewichtsmittleres Molekulargewicht Mw von 100 000 gmol$^{-1}$ oder mehr aufweist; mindestens 30 Gew.-% der Komponenten (i) und (ii) zusammen genommen ein gewichtsmittleres Molekulargewicht Mw im Bereich von 2000 bis 4000 gmol$^{-1}$ aufweist; und
   (b) das Bindemittel, bestehend aus Komponenten (i) und (ii), ein Mp im Bereich von 1700 bis 4500 gmol$^{-1}$ aufweist,

   die Molekulargewichte Mw, Mz und Mp werden durch Gelpermeationschromatografie in THF unter Verwendung von Polystyrolstandards bestimmt.

2. Autoxidierbare Beschichtungszusammensetzung nach Anspruch 1, wobei Verbindung i) mit Acetoacetat und/oder Glycidyl(meth)acrylat funktionalisiert ist.

3. Autoxidierbare Beschichtungszusammensetzung nach einem der vorhergehenden Ansprüche mit einem Pseudoplastizitätsgrad von 1,5 oder mehr, wobei der Pseudoplastizitätsgrad die Viskosität bei einer Scherrate von 1 s$^{-1}$ geteilt durch die Viskosität bei einer Scherrate von 5000 s$^{-1}$, beide bei 23 °C +/- 3 °C gemessen, ist.

4. Autoxidierbare Beschichtungszusammensetzung nach einem der vorhergehenden Ansprüche mit einem Pseudoplastizitätsgrad von 1,5 oder mehr bei Verdünnung mit Lösungsmittel auf eine Applikationsviskosität innerhalb des Bereichs von 0,1 bis 1 Pas, wobei der Pseudoplastizitätsgrad die Viskosität bei einer Scherrate von 1 s$^{-1}$ geteilt durch die Viskosität bei einer Scherrate von 5000 s$^{-1}$, beide bei 23 °C +/- 3 °C gemessen, ist.

5. Autoxidierbare Beschichtungszusammensetzung nach Anspruch 1, verdünnt auf eine Viskosität $\leq$ 1,0 Pas, wie bei einer Scherrate von 5000 s$^{-1}$ und einer Temperatur von 23 °C gemessen, durch Hinzufügen von $\leq$ 300 gl$^{-1}$ von Zusammensetzung, von Exxsol D40, bis zu einem Maximum von 300 gl$^{-1}$ von VOC, wobei Exxsol D40 eine Kohlenwasserstoffflüssigkeit mit einem Anfangssiedepunkt von typischerweise 153 bis 160 °C, einer Dichte bei 15 °C von 0,77 kg/dm$^3$ und einer Viskosität bei 25 °C von 1,25 mm$^2$/s ist.

6. Autoxidierbare Beschichtungszusammensetzung nach einem der vorhergehenden Ansprüche, wobei das autoxidierbare Material ein gewichtsmittleres Molekulargewicht, wie durch Gelpermeationschromatografie bestimmt, von 2000 bis 4000 gmol$^{-1}$ aufweist.

7. Autoxidierbare Beschichtungszusammensetzung nach einem der vorhergehenden Ansprüche, wobei das autoxidierbare Material mindestens eine Ethergruppe umfasst.

8. Verfahren zur Herstellung einer autoxidierbaren Beschichtungszusammensetzung nach einem der Ansprüche 1 bis 7, umfassend Mischen des autoxidierbaren Alkydharzes mit dem autoxidierbaren Material.

9. Farbe, umfassend eine autoxidierbare Beschichtungszusammensetzung nach einem der Ansprüche 1 bis 7.

10. Verfahren zum Auftragen der autoxidierbaren Beschichtungszusammensetzung nach einem der Ansprüche 1 bis 7 auf ein Substrat, umfassend Hinzufügen eines Trocknersalzes zur Beschichtungszusammensetzung und Trocknen der Beschichtungszusammensetzung.

**11.** Substrat, beschichtet mit der autoxidierbaren Beschichtungszusammensetzung nach einem der Ansprüche 1 bis 7.

**12.** Verwendung der autoxidierbaren Beschichtungszusammensetzung nach einem der Ansprüche 1 bis 7 zur Herstellung von Innen- und Außenbeschichtungen.

**Revendications**

**1.** Composition de revêtement auto-oxydable comprenant un liant constitué par les composants suivants :

(i) de 20 à 70 % en poids de résine alkyde auto-oxydable ayant un $M_z$ de 80 000 gmol$^{-1}$ ou plus ; et
(ii) de 30 à 80 % en poids d'un matériau auto-oxydable comprenant au moins 3 groupes acides gras, dans lequel le matériau auto-oxydable a
un $M_p$ dans la plage de 1700 à 4000 gmol$^{-1}$ ;
un indice de polydispersité (PDI) dans la plage de 1 à 2 ;
une longueur d'huile de 50 % ou plus ;
dans laquelle

(a) la distribution des poids moléculaires des composants (i) et (ii) dans le liant est telle que
au moins 5 % en poids des composants (i) et (ii) pris ensemble ont un poids moléculaire moyen en poids $M_w$ de 100 000 gmol$^{-1}$ ou plus ;
au moins 30 % en poids des composants (i) et (ii) pris ensemble ont un poids moléculaire moyen en poids $M_w$ dans la plage de 2000 à 4000 gmol$^{-1}$ ; et
(b) le liant constitué par les composants (i) et (ii) a un $M_p$ dans la plage de 1700 à 4500 gmol$^{-1}$,

lesdits poids moléculaires $M_w$, $M_z$ et $M_p$ étant déterminés par chromatographie par perméation de gel dans du THF à l'aide d'étalons polystyrène.

**2.** Composition de revêtement auto-oxydable selon la revendication 1, dans laquelle le composé i) est fonctionnalisé avec un acétoacétate et/ou un (méth)acrylate de glycidyle.

**3.** Composition de revêtement auto-oxydable selon l'une quelconque des revendications précédentes ayant un degré de pseudoplasticité de 1,5 ou plus, dans laquelle le degré de pseudoplasticité est la viscosité à un taux de cisaillement de 1 s$^{-1}$, divisée par la viscosité à un taux de cisaillement de 5000 s$^{-1}$, toutes deux mesurées à 23 °C +/- 3 °C.

**4.** Composition de revêtement auto-oxydable selon l'une quelconque des revendications précédentes ayant un degré de pseudoplasticité de 1,5 ou plus après dilution avec un solvant à une viscosité d'application dans la plage de 0,1 à 1 Pas, dans laquelle le degré de pseudoplasticité est la viscosité à un taux de cisaillement de 1 s$^{-1}$, divisée par la viscosité à un taux de cisaillement de 5000 s$^{-1}$, toutes deux mesurées à 23 °C +/- 3 °C.

**5.** Composition de revêtement auto-oxydable selon la revendication 1, diluée jusqu'à une viscosité ≤ 1.0 Pas, mesurée à un taux de cisaillement de 5000 s$^{-1}$ et à une température de 23° C, par ajout ≤ 300 gl$^{-1}$ de composition, d'Exxsol D40, jusqu'à un maximum de 300 gl$^{-1}$ de COV, dans laquelle l'Exxsol D40 est un fluide hydrocarboné ayant un point d'ébullition initial de typiquement 153 à 160 °C, une densité à 15 °C de 0,77 kg/dm$^3$ et une viscosité à 25 °C de 1,25 mm$^2$/s.

**6.** Composition de revêtement auto-oxydable selon l'une quelconque des revendications précédentes, dans laquelle ledit matériau auto-oxydable a un poids moléculaire moyen en poids, déterminé par chromatographie par perméation de gel, de 2000 à 4000 gmol$^{-1}$.

**7.** Composition de revêtement auto-oxydable selon l'une quelconque des revendications précédentes, dans laquelle ledit matériau auto-oxydable comprend au moins un groupe éther.

**8.** Procédé de préparation d'une composition de revêtement auto-oxydable selon l'une quelconque des revendications 1 à 7, comprenant le mélange de ladite résine alkyde auto-oxydable avec ledit matériau auto-oxydable.

**9.** Peinture comprenant une composition de revêtement auto-oxydable selon l'une quelconque des revendications 1 à 7.

**10.** Procédé d'application de la composition de revêtement auto-oxydable selon l'une quelconque des revendications 1 à 7 sur un substrat, comprenant l'ajout à la composition de revêtement d'un sel pour séchoir et le séchage de la composition de revêtement.

**11.** Substrat revêtu de la composition de revêtement auto-oxydable selon l'une quelconque des revendications 1 à 7.

**12.** Utilisation de la composition de revêtement auto-oxydable selon l'une quelconque des revendications 1 à 7 dans la préparation de revêtements à usage intérieur et extérieur.

FIGURE 1A/3

FIGURE 1B/3

FIGURE 2/3

FIGURE 3A/3

FIGURE 3B/3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4311624 A
- EP 0072127 A
- US 2663649 A
- EP 0668305 A
- US 5731095 A
- EP 1440107 A1

### Non-patent literature cited in the description

- **ERICH et al.** *Prog. Org. Coat.,* 2006, vol. 55 (2), 105-111
- **ERICH et al.** *J. Phys. Chem. B,* 2006, vol. 110 (15), 8166-8170
- **BASU et al.** *Prog. Org. Coat.,* 2005, vol. 53 (1), 1-16
- **TOMALIA et al.** *Angewandte Chemie International Edition English,* 1990, vol. 29, 138-175
- Encyclopaedia of Polymer Science and Engineering. 1990, 46-92
- **F RODRIGUEZ.** Principles of Polymer Systems. Mc-Graw-Hill International, 1983, 127-129
- **W. W. YAU ; J. K. KIRKLAND ; D. D. BIY.** Modern Size Exclusion Liquid Chromatography. John Wiley & Sons, 1997
- *The density of the compositions was measured according to ISO,* 1997, vol. 281, 1-2
- *The method to determine the volatile percentage was according to ISO,* 1993, vol. 3251